(19) Europäisches Patentamt
European Patent Office
Office européen des brevets

(11) **EP 2 472 305 B1**

(12) **FASCICULE DE BREVET EUROPEEN**

(45) Date de publication et mention
de la délivrance du brevet:
**16.08.2017 Bulletin 2017/33**

(51) Int Cl.:
***B23K 26/06*** *(2014.01)*       ***G02B 27/30*** *(2006.01)*
***B23K 26/38*** *(2014.01)*       ***H01S 3/00*** *(2006.01)*

(21) Numéro de dépôt: **11191316.6**

(22) Date de dépôt: **30.11.2011**

(54) **Système optique de focalisation pour installation de coupage avec laser solide**

Optisches System zur Fokussierung eines Laserstrahls in einem Festkörperlaser-Schneidegerät

Optical system for focusing a laser beam in a solid state laser cutting apparatus

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2011 FR 1150032**

(43) Date de publication de la demande:
**04.07.2012 Bulletin 2012/27**

(73) Titulaires:
• **L'Air Liquide Société Anonyme pour l'Etude et l'Exploitation des Procédés Georges Claude**
  **75007 Paris (FR)**
• **Air Liquide Welding France**
  **75007 Paris (FR)**

(72) Inventeurs:
• **Debecker, Isabelle**
  **75017 PARIS (FR)**
• **Verna, Eric**
  **95650 BOISSY L'AILLERIE (FR)**
• **Jouanneau, Thomas**
  **75019 PARIS (FR)**
• **Briand, Francis**
  **75009 PARIS (FR)**
• **Ballerini, Gaia**
  **75010 PARIS (FR)**

(74) Mandataire: **Pittis, Olivier**
  **L'AIR LIQUIDE S.A.**
  **Direction de la Propriété Intellectuelle**
  **75, Quai d'Orsay**
  **75321 Paris Cedex 07 (FR)**

(56) Documents cités:
EP-A1- 2 105 239          JP-A- 2009 226 473
US-A1- 2010 276 403

• V. I. BREDIKHIN ET AL: "Optical losses in polycrystalline CVD ZnS", INORGANIC MATERIALS, vol. 45, no. 3, 1 mars 2009 (2009-03-01), pages 235-241, XP055000637, ISSN: 0020-1685, DOI: 10.1134/S0020168509030029

**Description**

L'invention porte sur une configuration optique particulière mise en oeuvre dans une tête de coupage par laser à solide, en particulier à fibre, permettant de maîtriser les problématiques de dérive focale des optiques et d'échauffement de la tête de focalisation, et sur une installation laser équipée d'une telle tête de focalisation, en particulier une installation laser à fibres d'ytterbium.

Les nouvelles générations de lasers à solide, tels que les lasers à fibre ou à disque, ont bénéficié d'importantes avancées et combinent des puissances de plusieurs kW avec d'excellents facteurs de qualité ou BPP (pour Beam Product Parameter), contrairement aux lasers à milieu solide massif, tels les lasers Nd:YAG.

Au-delà des caractéristiques qui font de ces lasers des sources adaptées à la découpe de matériaux métalliques, en l'occurrence une longueur d'onde plus courte (1.07 $\mu$m) que celle des lasers $CO_2$ (10.6 $\mu$m), mieux absorbée par le métal et transportable par fibre optique, un encombrement réduit et une plus grande fiabilité, leur grande brillance améliore significativement les performances de découpe des matériaux métalliques ou non.

Typiquement, une installation de coupage laser fibre comprend une source laser et des dispositifs optiques pour transporter le faisceau laser jusqu'à une tête de coupage, aussi appelée tête de focalisation, qui assure la focalisation du faisceau dans l'épaisseur d'une pièce à couper.

La source laser est un laser à fibres dopées à l'ytterbium (Yb), équipé d'au moins une fibre optique de convoyage de faisceau, et la tête de coupage comporte des dispositifs optiques de collimation, de redirection et de focalisation permettant d'amener un faisceau laser focalisé jusqu'à une pièce à couper.

Une telle tête de focalisation pour faisceau laser fibre est décrite dans le document JP-A-2009226473. Cette tête comporte une lentille de collimation en sulfure de zinc (ZnS), une lentille de focalisation en silice fondue et un miroir de renvoi à 45° agencé entre ces deux lentilles.

Les dispositifs optiques, telle la lentille de focalisation, d'une tête de coupage laser doivent supporter de fortes densités surfaciques de puissance, typiquement entre 1 et 10 kW/cm$^2$ selon les caractéristiques de la source laser et le diamètre de faisceau sur les optiques, et ce, de manière soutenue tout en fonctionnant dans des environnements pollués qui les fragilisent.

En régime continu d'émission laser, l'endommagement des optiques se manifeste généralement sous la forme d'une dégradation progressive des performances des optiques, dans un premier temps sans dommages visibles, qui résulte essentiellement de phénomènes thermiques.

En effet, l'absorption résiduelle des revêtements de surfaces et des substrats des optiques conduit à un échauffement non uniforme du composant de l'optique et à l'accumulation de contraintes thermiques, en particulier pour des composants transmissifs, tels que les lentilles. Ces mécanismes affectent les paramètres et la qualité du faisceau laser et peuvent, après une longue période d'irradiation, conduire à une détérioration des optiques : apparition de brûlures, décollement des revêtements...

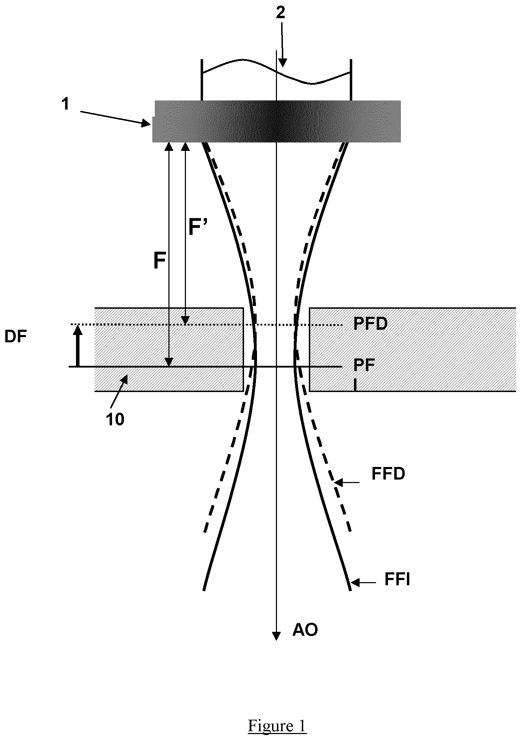

L'échauffement des optiques d'une tête de coupage engendre aussi une dérive DF du point de focalisation du faisceau liée à l'effet de lentille thermique, encore appelée dérive focale, laquelle est illustrée en Figure 1. Au cours de l'exposition d'une lentille 1, celle-ci est chauffée en son centre par le faisceau laser 2 collimaté de forte puissance délivré selon l'axe optique (AO), alors que ses bords sont plus froids. Un gradient thermique s'établit radialement dans la lentille 1. L'amplitude de ce gradient est d'autant plus grande que la densité de puissance reçue par la lentille 1 augmente. Il résulte de ce gradient thermique un gradient dans l'indice de réfraction du matériau. Ce phénomène, combiné à l'effet de dilatation thermique du matériau de la lentille 1, induit une modification du rayon de courbure effectif de la lentille 1 et une modification de ses caractéristiques de focalisation. Le plan focal initial (PFI) du faisceau, situé à une distance F de la lentille, est translaté le long de la direction de propagation du faisceau et se rapproche de la lentille 1 de focalisation, à une distance F', jusqu'à atteindre un plan de focalisation décalé (PFD). On assiste alors à une transformation du faisceau focalisé initial (FFI) en un faisceau focalisé décalé (FFD) présentant de moins bonnes caractéristiques de coupe.

La contamination de la surface des optiques par l'environnement, c'est-à-dire des poussières, des projections métalliques ou de l'humidité, et leur vieillissement sont des facteurs qui augmentent l'absorption des lentilles et aggravent progressivement le phénomène d'échauffement, conduisant à l'augmentation de l'amplitude de la dérive focale au fil du temps.

Or, les performances d'un procédé de coupage laser industriel sont évaluées en termes de vitesse de coupe, de qualité de coupe, à savoir des faces de coupe droites, lisses et sans bavures, et de tolérances sur les paramètres de fonctionnement du procédé.

Le procédé de coupage par laser à fibre est sensible aux variations de la position du point focal du faisceau par rapport à la surface de la pièce traitée, surtout lorsqu'il s'agit de découper des tôles de fortes épaisseurs, à savoir de 4 mm et au-delà. Les tolérances admises sur le positionnement du point focal sont typiquement de $\pm$ 0.5 mm. Si la position focale du faisceau laser varie au-delà des tolérances admises, il n'est plus possible de maintenir des performances de coupe optimales.

Une solution est alors de rechercher de nouveaux paramètres de coupe pour compenser la dérive focale, ou de remplacer les optiques de la tête de focalisation. Il en résulte une dégradation de la productivité du procédé industriel automatisé.

Un problème critique se pose lorsque la position du point focal varie au cours de l'opération de découpe car cela conduit à des performances de coupe inégales d'une pièce à l'autre, voire d'une face à l'autre d'une même pièce.

Les phénomènes décrits ci-avant montrent que la durabilité des performances d'un procédé de coupage est fortement liée à la résistance des dispositifs optiques assurant la propagation du faisceau laser. Le positionnement du point focal étant un paramètre important du procédé de coupage par laser à fibre, il est essentiel que la position focale du faisceau soit la plus stable possible et que les déviations restent dans les tolérances admises. Les distorsions thermiques subies par les éléments optiques à forte puissance doivent être minimales pour éviter leur endommagement. Toutes ces exigences doivent être prises en compte lors du choix des optiques constituant le système de focalisation d'une tête de coupage laser.

Or, le problème qui se pose est qu'il existe des difficultés à transporter les faisceaux laser de forte brillance pour les applications de coupage. Les puissances laser disponibles ne cessent de croître mais c'est la résistance des dispositifs optiques qui limitent les puissances pouvant être mises en oeuvre pour le coupage. En effet, les faisceaux de forte brillance sont caractérisés par leurs fortes puissances combinées à d'excellents facteurs de qualité, c'est-à-dire de faibles BPP, par exemple de l'ordre de 0,33 mm.mrad. Il en résulte de très fortes densités de puissance sur les surfaces des optiques des têtes de focalisation et une augmentation des gradients et distorsions thermiques. Il est aussi constaté que la résistance des matériaux optiques à l'endommagement laser est moins bonne avec les lasers à forte brillance qu'avec les lasers classiques de type $CO_2$, car la longueur d'onde plus courte de ces lasers est plus sensible aux défauts présents dans les substrats et les revêtements de surface des éléments optiques, ce qui peut causer localement un échauffement excessif.

Le problème à résoudre est dès lors de pouvoir maîtriser les problématiques de dérive focale et d'échauffement susmentionnés se posant lors de l'utilisation de laser solides, en particulier de laser à fibre, notamment à fibre d'ytterbium, afin de garantir durablement les performances de coupe, en particulier lors de la mise en oeuvre d'un procédé de coupage laser à forte puissance, c'est-à-dire à une puissance d'au moins 1 kW.

Une solution à ce problème, décrite dans le document US-A-2010/0276403, consiste à utiliser une tête de focalisation dont les optiques sont formées d'un matériau possédant une bonne conductivité thermique En effet, l'amplitude du gradient thermique s'établissant dans les lentilles sous irradiation laser est inversement proportionnelle à la conductivité thermique du matériau constituant les lentilles. Or, la conductivité thermique du ZnS (0.272 W/cm/°C) est de l'ordre de 20 fois celle de la silice fondue (0.0138 W/cm/°C). Cette conductivité thermique plus élevée traduit une plus grande aptitude du ZnS à évacuer la chaleur, et permet de limiter l'amplitude des gradients et des distorsions thermiques induits au niveau des lentilles par l'irradiation à forte puissance.

Néanmoins, l'utilisation d'un matériau tel que le ZnS pour la lentille de focalisation d'une tête de coupage laser présente un inconvénient majeur.

En effet, toute lentille de focalisation induit un phénomène de dispersion d'une partie des rayons lumineux du faisceau laser transmis.

Il existe plusieurs contributions à ce phénomène de diffusion, à savoir la rugosité des surfaces du substrat, les inhomogénéités et les défauts présents dans le substrat de la lentille et les couches minces déposées sur le substrat, ainsi qu'aux interfaces entre ces couches minces et le substrat.

Ces contributions sont prédominantes pour les matériaux dont la structure est amorphe, tels la silice fondue, mais ce n'est pas le cas pour les matériaux dont la structure est polycristalline, tels le sulfure de zinc (ZnS).

En effet, les matériaux polycristallins ont une structure granulaire. Ils sont constitués d'un ensemble de grains, chaque grain étant caractérisé par une maille cristalline ayant une orientation particulière.

Les discontinuités aux joints de grains induisent la diffusion du faisceau laser au sein même du matériau qui constitue le substrat de la lentille. Pour un faisceau de forte puissance, c'est-à-dire au moins 1 kW, une diffusion excessive du faisceau laser transmis par la lentille de focalisation conduit à la déviation d'une partie des rayons en dehors de l'axe de propagation du faisceau laser, vers le corps de la corps de la tête de focalisation. Ce phénomène de diffusion dans les matériaux polycristallins a été mis en évidence lors d'expériences menées sur des échantillons de ZnS et rapportées dans le document « Optical Losses in Polycrystalline CVD ZnS », V. I. Bredikhin et al, Inorganic Materials, vol. 45, no. 3,2009.

De façon générale, pour le ZnS, le coefficient de pertes optiques résultant de ce phénomène, c'est-à-dire le coefficient de pertes de puissance du faisceau suite à son passage dans le matériau, est typiquement estimé autour de 3%/cm, c'est-à-dire 3% par cm de trajet parcouru par le faisceau laser dans le matériau. Pour un faisceau d'une puissance de 2000 W et un échantillon de ZnS d'une épaisseur de 7 mm, la puissance perdue par diffusion est estimée à environ 40 W.

Cette perte de puissance peut sembler négligeable par rapport aux puissances de plusieurs kW mises en jeu dans un procédé de coupage laser. Par ailleurs, la bonne conductivité thermique du ZnS laisse penser que la chaleur supplémentaire accumulée sera aisément évacuée par la lentille, ce qui n'affectera pas le positionnement du point focal.

Or, les inventeurs de la présente invention ont mis en évidence que ces faibles pertes produisaient un échauffement non négligeable des pièces de la tête de focalisation qui pouvait s'avérer nuisible au procédé de coupage laser, en particulier par laser à fibre.

En effet, les rayons optiques formant le faisceau laser sont diffusés de manière isotrope autour de la lentille. En particulier, une partie des rayons est diffusée en aval de la lentille, vers les pièces situées en partie basse de la tête, en particulier les pièces supportant la buse et la capteur capacitif servant à ajuster la distance entre la buse et la pièce à découper.

L'énergie de ces rayons est en partie absorbée par ces pièces, puis convertie en chaleur. Il s'ensuit un échauffement des pièces de la tête de focalisation. En particulier, l'échauffement de la buse et de son support s'avère particulièrement néfaste au procédé de découpe laser puisqu'il perturbe non seulement l'ajustement de la distance entre la buse et la pièce à découper mais aussi l'écoulement du gaz d'assistance à travers la buse.

La présente invention vise donc à proposer une tête de focalisation ne présentant pas les problèmes de dérive focale ci-dessus lorsqu'on l'utilise en coupage laser pour focaliser un faisceau laser généré en particulier par une source laser à fibre ou à disque, et ne présentant pas, en outre, les problèmes d'échauffement des pièces de la tête de coupage laser situées en aval de la lentille de focalisation, en particulier au voisinage de la buse d'où s'évacue le gaz d'assistance servant à chasser le métal en fusion.

La solution de l'invention est alors une tête de focalisation de faisceau laser comprenant une lentille de collimation et une lentille de focalisation, caractérisée en ce que la lentille de collimation est en ZnS et la lentille de focalisation est en silice fondue, et lesdites lentilles ont une épaisseur aux bords d'au moins 5 mm, et un miroir de renvoi fonctionnant à un angle d'incidence ($\alpha$) compris entre 40 et 50° est agencé, sur le trajet du faisceau laser au sein de ladite tête de focalisation, entre les lentilles de collimation et de focalisation.

Pour résoudre les problèmes ci-dessus, on met en oeuvre selon l'invention une tête de focalisation comprenant, en combinaison, une lentille de collimation est en ZnS et une lentille de focalisation fabriquée à partir d'un matériau dont la structure est amorphe, en l'occurrence de la silice fondue, et dont le coefficient de diffusion est minimal.

Selon le cas, la tête de focalisation de l'invention peut comprendre l'une ou plusieurs des caractéristiques suivantes :

- la lentille de collimation et la lentille de focalisation ont une épaisseur aux bords comprise entre 5 et 10 mm, de préférence entre 6 et 8 mm.
- la lentille de collimation et la lentille de focalisation ont un diamètre compris entre 35 et 55 mm.
- le miroir de renvoi est en silice.

L'invention porte également sur une installation de coupage par faisceau laser comprenant :

- un dispositif à laser solide émettant un faisceau laser de longueur d'onde comprise entre 1.06 et 1.10 $\mu$m et de puissance comprise entre 0.1 et 25 kW,
- une tête de focalisation selon l'une des revendications précédentes, et
- une fibre de convoyage reliant le dispositif à laser solide à la tête de focalisation de manière à acheminer le faisceau laser émis par le dispositif à laser solide à la tête de focalisation.

Selon le cas, l'installation de l'invention peut comprendre l'une ou plusieurs des caractéristiques suivantes :

- le dispositif à laser solide est de type à fibres ou à disques, de préférence à fibres d'ytterbium.
- le dispositif à laser solide émet un faisceau laser de puissance comprise entre 1 et 5 kW en mode continu, quasi-continu ou impulsionnel, de préférence en mode continu.
- la fibre de convoyage a un diamètre inférieur ou égal à 150 $\mu$m, de préférence un diamètre de 50 $\mu$m ou de 100 $\mu$m.
- le dispositif à laser solide émet un faisceau laser ayant un BPP compris entre 1.6 et 4 mm.mrad.
- la fibre de convoyage a un diamètre de 50 $\mu$m et un BPP compris entre 1.6 et 2.2 mm.mrad, et la lentille de collimation a une distance focale comprise entre 70 et 120 mm, de préférence comprise entre 70 et 90 mm, et la lentille de focalisation a une distance focale comprise entre 200 et 300 mm, de préférence entre 220 et 280 mm.
- la fibre de convoyage (FDC) a un diamètre de 100 $\mu$m et un BPP compris entre 2.6 et 4 mm.mrad, et la lentille de collimation a une distance focale comprise entre 120 et 180 mm, , de préférence comprise entre 140 et 180 mm et la lentille de focalisation a une distance focale comprise entre 200 et 300 mm, de préférence entre 220 et 280 mm.
- la lentille de focalisation a une distance focale comprise entre 200 et 300 mm.

Par ailleurs, l'invention concerne également un procédé de coupage par faisceau laser d'une pièce métallique, dans lequel on met en oeuvre une tête de focalisation ou une installation de coupage par faisceau laser selon l'invention.

La présente invention, qui porte notamment sur une configuration optique particulière utilisée dans une tête de coupage par laser à fibre, va être mieux comprise grâce à la description détaillée suivante et des Figures annexées parmi lesquelles :

- la Figure 1 représente le positionnement du point de focalisation du faisceau laser et son évolution lorsque le système optique de la tête de coupage laser subit une dérive focale,
- la Figure 2 représente le schéma de principe d'un système optique typique d'une tête de coupage et les paramètres caractéristiques du faisceau laser se propageant à travers le système optique,
- la Figure 3 schématise le principe de fonctionnement d'une installation et d'un procédé de coupage laser selon l'invention,
- la Figure 4 représente une comparaison de l'évolution de la position du point focal du faisceau au cours de l'irradiation laser d'un système de lentilles en ZnS ou en silice fondue (S), et
- la Figure 5 est une comparaison de l'évolution de la position du point focal du faisceau focalisé par un système de lentilles en ZnS comprenant une lentille de collimation d'épaisseur aux bords 2 ou 7 mm.

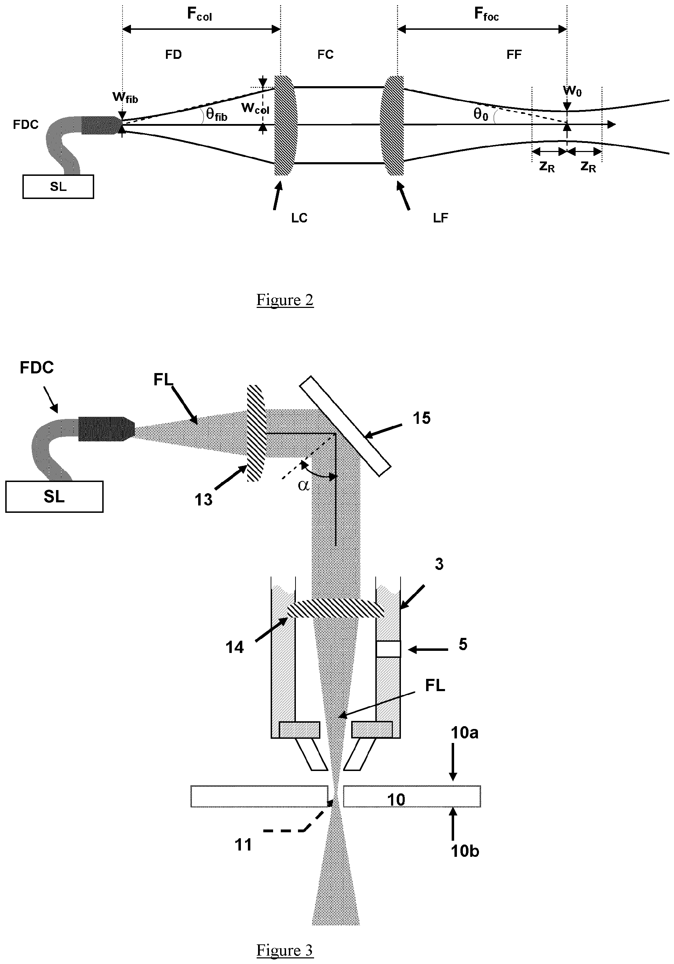

Une installation de coupage selon l'invention comprend une source laser SL à solide équipée d'au moins une fibre optique de convoyage FC de faisceau et une tête de focalisation 3, encore appelée tête de coupage, pour transporter et focaliser le faisceau laser FL sur ou dans la pièce 10 à couper. Les caractéristiques et les plages de fonctionnement de l'installation sont expliquées ci-après et illustrées en Figure 3.

La tête de coupage 3 comprend, de manière classique, des dispositifs optiques de collimation, de redirection et de focalisation du faisceau laser.

Par ailleurs, le faisceau laser est émis par un dispositif ou générateur laser à solide, préférablement un laser à fibres dopées à l'ytterbium (Yb). Dans le dispositif laser, l'effet laser, c'est-à-dire le phénomène d'amplification de la lumière servant à générer le rayonnement laser, est obtenu au moyen d'un milieu amplificateur préférablement pompé par des diodes laser et constitué d'une ou de typiquement plusieurs fibres optiques dopées, préférablement en silice dopées à l'ytterbium.

La longueur d'onde du rayonnement émis en sortie du dispositif laser est comprise entre 1.06 et 1.10 $\mu$m, et la puissance laser se situe entre 0.1 et 25 kW, typiquement entre 1 et 5 kW.

Le laser peut fonctionner en mode continu, quasi-continu ou impulsionnel, mais la présente invention est particulièrement avantageuse lorsque l'on travaille en mode continu car il s'agit du mode d'irradiation le plus sévère pour les optiques d'une tête de coupage.

Le faisceau généré par la source laser solide est émis et convoyé jusqu'à la tête de focalisation au moyen d'au moins une fibre optique de convoyage en silice non-dopée, de diamètre inférieur à 150 $\mu$m, par exemple égal à 50 ou 100 $\mu$m.

De manière générale, utiliser une source laser de forte brillance, tels les lasers à fibre, permet de générer des faisceaux de forte puissance avec d'excellents facteurs de qualité. Le degré de qualité d'un faisceau laser se mesure à son facteur de qualité ou Beam Parameter Product (BPP). Le BPP est déterminé par les caractéristiques de la source laser SL et le diamètre de la fibre de convoyage FDC. Il s'exprime comme le produit du rayon $w_0$ au col du faisceau laser focalisé par son demi-angle de divergence $\theta_0$, comme illustré sur la Figure 2. Le BPP est aussi défini par le produit du rayon $w_{fib}$ de la fibre optique de convoyage émettant le faisceau laser par le demi-angle de divergence du faisceau en sortie de fibre $\theta_{fib}$. Ainsi, pour une fibre de 50 $\mu$m, le BPP du faisceau est typiquement compris entre 1.6 et 2 mm.mrad, alors que pour une fibre de 100 $\mu$m, le BPP est typiquement compris entre 2.7 et 4 mm.mrad.

Comme illustré sur la Figure 2, le système de focalisation de la tête de coupage laser est composé successivement, dans le sens de circulation du faisceau laser, d'au moins une lentille de collimation LC permettant d'obtenir un faisceau collimaté FC à partir d'un faisceau divergent FD, et d'au moins une lentille de focalisation LF permettant d'obtenir un faisceau focalisé FF et de concentrer l'énergie du laser sur la pièce à couper. Les distances focales de collimation et de focalisation sont choisies de manière à obtenir une tâche focale, encore appelé spot focal, ayant un diamètre adéquat pour avoir la densité de puissance nécessaire au coupage de la pièce.

Le diamètre du faisceau $2w_0$ dans le plan de focalisation est défini comme le produit du diamètre $2w_{fib}$ de la fibre par le grandissement optique G du système de focalisation et s'exprime :

$$2w_0 = 2w_{fib} \cdot G = 2w_{fib} \cdot \frac{F_{foc}}{F_{col}}$$

Où:

- G est donné par le rapport entre la distance focale $F_{foc}$ de la lentille de focalisation FC et la distance focale $F_{col}$ de la lentille de collimation LC.

- $w_0$ et $w_{fib}$ sont les rayons caractéristiques du faisceau dans le plan focal et de la fibre, respectivement. On entend par rayon caractéristique w la distance par rapport à l'axe optique où l'intensité chute à $1/e^2$ (environ 13.5%) de sa valeur maximale, ce qui signifie que 86.5% de la puissance du faisceau est comprise dans le disque de rayon w. Tous les paramètres du faisceau sont définis d'après ce critère.

Le rayon du faisceau irradiant les optiques de collimation et de focalisation est donné par la relation suivante :

$$w_{col} = \theta_{fib}.F_{col}$$

Le demi-angle de divergence $\theta_{fib}$ du faisceau émis par la fibre de convoyage se déduit de la valeur du BPP du faisceau focalisé grâce à la relation :

$$BPP = w_0.\theta_0 = w_{fib}.\theta_{fib}$$

On définit la densité moyenne de puissance par unité de surface, aussi appelée densité de puissance (DP) et exprimée en kW/cm$^2$, irradiant les optiques de la façon suivante :

$$DP = \frac{P_{las}}{\pi w_{col}^2}$$

où : $P_{las}$ est la puissance totale du rayonnement émis par la source laser et $w_{col}$ est le rayon caractéristique du faisceau irradiant les optiques.

De là, on comprend les problèmes qui se posent lors de l'utilisation d'un générateur laser de forte brillance, tel qu'un laser à fibre, à savoir que :

- Ce type de source est caractérisé par de faibles BPP et donc par des faisceaux ayant une divergence $\theta_{fib}$ plus faible en sortie de fibre. Ce paramètre traduit la vitesse d'expansion en champ lointain du faisceau émis par la fibre de convoyage et détermine le diamètre du faisceau sur les optiques du système. A distance focale de collimation équivalente, un faisceau de meilleure qualité et donc de divergence plus faible a un diamètre $2w_{col}$ plus petit sur la lentille de collimation. Il en résulte une augmentation de DP. A titre indicatif, le Tableau 1 ci-après donne un comparatif des caractéristiques typiques de faisceau pour différents lasers, ainsi que les densités de puissance obtenues sur les optiques pour une puissance de 2 kW et une distance focale de la lentille de collimation égale à 100 mm.
- A grandissement optique identique, un faisceau de plus faible BPP est focalisé avec le même diamètre focal et possède une divergence $\theta_0$ plus faible. Sa longueur de Rayleigh $z_R = w_0/\theta_0$ est plus grande. Or le décalage du point focal induit par l'échauffement du système de focalisation à forte puissance est proportionnel à $z_R$.

Tableau 1

| Source laser | Nd:YAG (1.06 $\mu$m) | | Fibre (1.07 $\mu$m) |
|---|---|---|---|
| Pompage | Lampes | Diodes | Diodes |
| Diamètre typique de fibre ($\mu$m) | 600 | 400 | 100 |
| BPP typique (mm.mrad) | 25 | 15 | 3 |
| Divergence $\theta_{fib}$ (mrad) | 83 | 75 | 60 |
| $2w_{col}$ (mm) pour $F_{col}$=100mm | 16.7 | 15.0 | 12.0 |
| DP à 2 kW (kW/cm$^2$) | 0.9 | 1.1 | 1.8 |

On voit que la densité de puissance sur les lentilles augmente lorsque le faisceau gagne en qualité. Or l'amplitude du gradient thermique s'établissant dans les optiques sous irradiation laser augmente avec la densité de puissance supportée par les optiques. Il est donc astucieux de travailler avec des optiques présentant le meilleur comportement thermique possible pour éviter les problèmes de dérive focale et d'endommagement laser.

A cette fin, le système optique de l'invention combine les spécificités décrites ci-dessous, selon le schéma présenté en Figure 3.

La tête de coupage 3 est constituée de dispositifs optiques travaillant en transmission, c'est-à-dire ici des lentilles 13, 14, servant pour les opérations de collimation (en 13) et de focalisation (en 14) du faisceau laser FL issu de la fibre de convoyage et généré par la source laser solide SL.

On utilise avantageusement du ZnS comme substrat pour la lentille de collimation 13. En effet, comme mentionné précédemment, l'amplitude du gradient thermique s'établissant dans les lentilles sous irradiation laser est inversement proportionnelle à la conductivité thermique du matériau constituant les lentilles. Or, la conductivité thermique du ZnS (0.272 W/cm/°C) est de l'ordre de 20 fois celle de la silice fondue (0.0138 W/cm/°C). Cette conductivité thermique plus élevée traduit une plus grande aptitude du ZnS à évacuer la chaleur, et permet de limiter l'amplitude des gradients et des distorsions thermiques induits au niveau des lentilles par l'irradiation à forte puissance.

Par ailleurs, on utilise avantageusement de la silice fondue comme substrat pour la lentille de focalisation 14. En effet, comme expliqué plus haut, il est impératif d'utiliser dans cette zone une lentille dont le coefficient de diffusion est minimal pour minimiser la déviation aléatoire d'un partie du faisceau laser focalisé FF et ainsi réduire l'échauffement de la partie basse du corps de la tête, en particulier de la buse.

Ces dispositifs optiques de collimation 13 et de focalisation 14 peuvent être choisis parmi les différents types de lentilles disponibles. Les lentilles sont préférablement des singlets afin de limiter le nombre de surfaces optiques du système de focalisation et de minimiser les risques d'endommagement. Différentes géométries de lentilles peuvent être utilisées, par exemple plan-convexe, biconvexe ou ménisque. Elles sont de préférence plan-convexe. Toutes les surfaces optiques sont préférablement traitées anti-reflet à la longueur d'onde du laser.

Les lentilles de la tête de coupage sont placées dans un support thermalisé. De l'eau circule dans le support et permet un refroidissement par contact indirect avec les lentilles. La température de l'eau est comprise entre 19 et 25 °C.

L'épaisseur et le diamètre des lentilles 13, 14 ont également une influence sur leur comportement thermique. Plus on augmente les dimensions des lentilles, mieux la chaleur est évacuée vers les zones périphériques plus froides, et plus l'amplitude des gradients thermiques diminue. Dans les têtes de coupage conventionnelles, on utilise des lentilles épaisses, c'est-à-dire d'une épaisseur aux bords d'au moins 5 mm, uniquement pour réaliser les opérations de focalisation. En effet, le gaz d'assistance est injecté directement après la lentille de focalisation, ce qui les expose à de fortes pressions. Les lentilles de focalisation doivent donc être épaisses pour avoir une bonne résistance mécanique. Par exemple, le document EP-A-2105239 décrit un système optique de focalisation pour laser Nd :YAG dont la lentille de focalisation a une épaisseur aux bords de l'ordre de 6.87 mm. L'épaisseur des optiques de collimation n'est quant à elle pas précisée.

Les lentilles de collimation des têtes de coupage conventionnelles sont généralement plus fines que les lentilles de focalisation, c'est-à-dire d'une épaisseur strictement inférieure à 5 mm. En effet, ces lentilles ne sont soumises à aucune pression de gaz. Il est donc habituel de préférer des lentilles fines, moins coûteuses que des lentilles épaisses et plus répandues chez les fournisseurs d'optiques

Dans le cadre de l'invention, afin de réduire le phénomène de dérive focale, on utilise des lentilles épaisses aussi bien pour la collimation que la focalisation du faisceau. Contrairement à ce qui se fait habituellement, la tête de coupage 3 est donc constituée de lentilles dont l'épaisseur aux bords est d'au moins 5 mm, et préférablement comprise entre 6 et 8 mm.

De même qu'une plus grande épaisseur offre un meilleur comportement thermique, les optiques de plus grand diamètre évacuent mieux la chaleur vers leurs bords.

Selon le diamètre du faisceau impactant les lentilles, il est habituel de chercher à minimiser le diamètre des lentilles de manière à réduire le coût, l'encombrement et le poids des têtes de coupage laser. C'est le cas en particulier avec les lasers à fibres dont les fortes brillance conduisent à des diamètres de faisceau impactant les lentilles plus faibles qu'avec les lasers à milieu solide massif.

Selon l'invention, quelle que soit la dimension du faisceau impactant sur les optiques de la tête de coupage, la tête de coupage 3 met donc en oeuvre des lentilles dont le diamètre est compris entre 35 et 55 mm.

Dans la tête de coupage 3, un composant réflectif 15 est placé sur le trajet du faisceau laser 10 entre la lentille de collimation 13 et la lentille de focalisation 14. Ce composant est un miroir plan. Le substrat du miroir est avantageusement constitué de silice fondue.

Au moins une face du miroir est revêtue d'un traitement réfléchissant. Ce revêtement est constitué de couches minces optiques et réfléchit la longueur d'onde du faisceau laser de coupage ainsi que les longueurs d'onde comprises entre 630 et 670 nm. Le traitement est en revanche transparent pour une partie du spectre visible ou infrarouge, incluant la longueur d'onde d'un système d'éclairage, par exemple une diode laser. De cette façon, il permet le raccordement d'un dispositif de contrôle de procédé (type caméra ou photodiode) à l'arrière du miroir. Il fonctionne à un angle d'incidence $\alpha$ compris entre 40 et 50°, de préférence égal à 45°. L'épaisseur du miroir est comprise entre 3 et 15 mm, de préférence entre 8 et 12 mm. Ce miroir permet tout d'abord de réduire l'encombrement vertical de la tête pour gagner en stabilité mécanique. De plus, dans cette configuration, la fibre de convoyage est maintenue à l'horizontale, ce qui réduit les risques d'introduction de poussière lors des opérations de montage et démontage de la fibre ou du collimateur. Enfin, l'intégration d'un composant réflectif sur le trajet du faisceau permet de compenser une partie de la dérive focale induite par les lentilles. En effet, le déplacement longitudinal du point focal induit par un composant réflectif a lieu dans la direction opposée à la dérive focale induite par un composant transmissif. Ceci résulte de la dilatation thermique du substrat lors de l'échauffement provoqué par l'exposition au faisceau laser de forte puissance. Du fait de la distribution gaussienne de l'intensité laser, la surface du composant réflectif se bombe et induit un effet divergent sur le faisceau laser réfléchi par le miroir. Il s'ensuit que le point focal du faisceau s'éloigne de la lentille de focalisation 14, au lieu de s'en rapprocher comme c'est le cas avec un composant transmissif tel une lentille. Cet effet peut donc être utilisé pour compenser une partie de la dérive focale induite par les lentilles de la tête. De plus, l'utilisation de silice fondue pour le composant 15 est particulièrement avantageuse par rapport à l'utilisation d'autres matériaux présentant une meilleure conductivité thermique, tels le ZnS ou encore le cuivre, ce dernier matériau étant classiquement utilisé pour former les composants réflectifs de têtes de coupage laser. En effet, la dilatation thermique du substrat du composant réflectif est d'autant plus importante que sa conductivité est faible. La compensation de la dérive focale induite par les lentille sera donc plus efficace avec de la silice fondue qu'avec un autre matériau évacuant mieux la chaleur.

Les lentilles de la tête de coupage 3 sont aussi caractérisées par des distances focales spécifiques, adaptées au BPP de la fibre de convoyage utilisée. Ces focales sont nécessaires à l'obtention du diamètre de spot focal $2w_0$ adéquat pour couper le matériau traité.

Les épaisseurs des pièces découpées au laser, en particulier avec un laser à fibre d'ytterbium, sont en général comprise entre 0.1 et 30 mm.

Selon l'épaisseur et la nature du matériau que l'on souhaite découper, le diamètre de spot focal $2w_0$ adéquat est typiquement compris entre 100 à 200 $\mu$m, de préférence entre 120 et 200 $\mu$m. Ces valeurs permettent selon l'épaisseur, d'avoir un bon compromis entre une densité de puissance suffisante sur la pièce a découper et une taille de spot suffisante pour ouvrir une saignée suffisamment large.

La distance focale de focalisation est comprise entre 200 et 300 mm, de préférence entre 220 et 280 mm. Ces valeurs permettent d'obtenir une bonne homogénéisation du gaz d'assistance dans la chambre formée entre la lentille de focalisation et la buse, améliorant ainsi les caractéristique dynamiques du jet de gaz d'assistance en sortie de la buse.

La distance focale de la lentille de collimation dépend du diamètre de la fibre de convoyage.

Pour une fibre de convoyage de diamètre 50 $\mu$m, le BPP du faisceau est typiquement compris entre 1.6 et 2.2 mm.mrad. Afin d'avoir le grandissement optique G nécessaire à l'obtention d'un diamètre de spot $2w_0$ adéquat, la distance focale de la lentille de collimation est comprise entre 70 et 120 mm, de préférence comprise entre 70 et 90 mm. Pour une fibre de convoyage de diamètre 100 $\mu$m, le BPP du faisceau est typiquement compris entre 2.6 et 4 mm.mrad. Afin d'avoir le grandissement optique G nécessaire à l'obtention d'un diamètre de spot $2w_0$ adéquat, la distance focale de la lentille de collimation est comprise entre 120 et 180 mm, de préférence comprise entre 140 et 180 mm.

La tête de focalisation 3 est alimentée en gaz d'assistance via une entrée de gaz 5 aménagée dans la paroi de ladite tête de focalisation 3, par laquelle, un gaz ou mélange gazeux sous pression provenant d'une source de gaz, par exemple une ou plusieurs bouteilles de gaz, une capacité de stockage ou encore une ou plusieurs canalisations de gaz, tel un réseau de distribution de gaz, est introduit en amont de la buse 4 et est évacué par cette buse 4 en direction de la pièce 30 à découper par faisceau laser.

Le gaz d'assistance sert à chasser le métal fondu hors de la saignée 12 de coupe obtenue par fusion du métal au moyen du faisceau laser FL qui est focalisé à la position 11 par rapport à la surface de la pièce 10 à couper.

Le choix du gaz se fait en fonction des caractéristiques du matériau à couper, notamment de sa composition, de sa nuance, de son épaisseur. Par exemple, de l'air, de l'oxygène, des mélanges azote/oxygène ou hélium/azote peuvent être utilisés pour le coupage de l'acier, alors que de l'azote, des mélanges azote/hydrogène ou argon/azote peuvent être utilisés pour couper l'aluminium ou l'acier inoxydable.

En fait, la pièce 10 à découper par laser peut être formée de différents matériaux métalliques, tel que l'acier, l'acier inoxydable, l'acier doux ou les alliages légers, tel l'aluminium et ses alliages, voire le titane et ses alliages, et avoir une épaisseur typiquement comprise entre 0.1 mm et 30 mm.

Au cours du procédé de découpe, le faisceau laser peut être focalisé (en 11) dans l'épaisseur, ou sur ou à proximité immédiate d'une des surfaces de la pièce 10, c'est-à-dire à l'extérieur et à quelques mm au-dessus ou au-dessous de la surface supérieure 10a ou inférieure 10b de la pièce 10, ou sur la face supérieure 10a ou inférieure 10b. De préférence, la position 11 du point focal se situe entre 5 mm au-dessus de la surface supérieure 10a et 5 mm au-dessous de la surface inférieure 10b de la pièce 10.

D'une façon générale, grâce à la combinaison de lentilles en Zns et en silice selon la présente invention, il est possible de garantir des performances constantes tout au long de l'opération de coupage laser :

- en minimisant la dérive focale du système optique grâce à l'utilisation de lentilles de collimation et de focalisation épaisses et de grand diamètre, ainsi qu'à l'utilisation d'une lentille de collimation en ZnS et
- en réduisant le phénomène d'échauffement du corps de la tête de coupage situé en aval de la lentille de focalisation grâce à l'utilisation d'une lentille de focalisation en silice fondue.

Le meilleur comportement thermique du ZnS par rapport à la silice fondue a été mis en évidence en comparant la dérive focale induite lors de l'exposition à forte puissance de ces deux types de lentilles.

Pour cela, deux systèmes optiques constitués chacun d'une lentille de collimation de distance focale de 80 mm et d'une lentille de focalisation de 250 mm ont été comparés. L'un était constitué de lentilles en ZnS, l'autre en silice fondue.

La caustique du faisceau laser focalisé par chaque système a pu être enregistrée grâce à un analyseur de faisceau. Ce dispositif mesure le rayon du faisceau pour lequel 86% de la puissance du laser est contenue dans un disque de ce rayon et ceci dans des plans de propagation successifs se situant sur une distance d'environ 10 mm de part et d'autre du col du faisceau focalisé.

A partir de la caustique enregistrée, il est possible de déterminer la position du plan focal du faisceau laser le long de sa direction de propagation. L'évolution de la position du plan focal au cours d'une exposition prolongée des optiques de focalisation peut être suivie en effectuant une série d'analyses de faisceau.

Au cours de ces essais, chaque système optique a été exposé pendant environ 30 minutes. Dans la configuration optique étudiée, le faisceau avait un diamètre de 9.6 mm sur la lentille, conduisant à une densité de puissance de l'ordre de 2.8 kW/cm$^2$ à 2 kW.

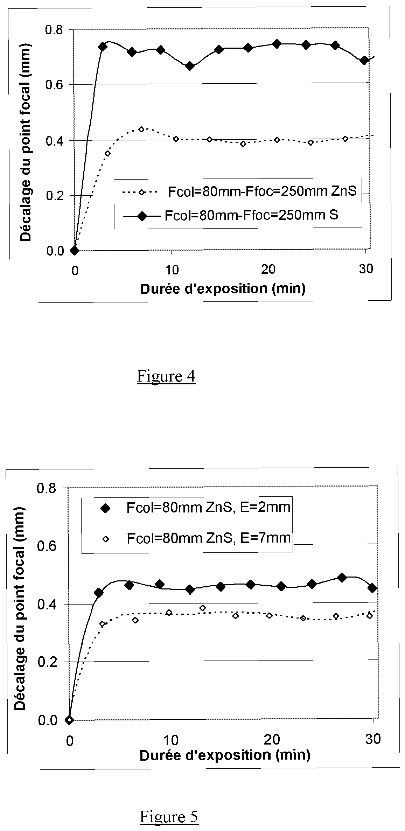

La Figure 4 présente une comparaison de l'évolution de la position du point focal du faisceau focalisé par un système de lentilles en ZnS ou en silice fondue (S). Pour chaque courbe, le premier point correspond à la position relevée lors d'une première analyse de faisceau effectuée à 200 W. A cette puissance, le décalage focal induit par l'effet de lentille thermique est négligeable. On peut considérer que la position mesurée correspond à la position où se situe le point focal du faisceau instantanément après l'allumage du laser. C'est ensuite à partir de cette position que l'on mesure le décalage focal. Le premier point des courbes correspond donc à un décalage du point focal nul.

Sur la Figure 5, on peut voir que le décalage longitudinal du point focal est plus important pour le système en silice fondue (S) que pour celui en ZnS. L'utilisation du ZnS permet ainsi de réduire l'amplitude du déplacement du point focal lors de l'irradiation des optiques à forte puissance.

L'effet d'une variation de l'épaisseur aux bords de la lentille de collimation a également été étudié. Pour cela, on a comparé l'amplitude du déplacement du point focal obtenu avec un système de lentilles en ZnS comprenant une lentille de collimation d'une épaisseur aux bords E de 2 mm ou un système comprenant une lentille de collimation d'épaisseur aux bords E de 7 mm.

La Figure 5 montre une comparaison de l'évolution de la position du point focal du faisceau focalisé par les deux systèmes, selon la méthode décrite ci-avant.

On peut voir que le décalage longitudinal du point focal est plus important lorsque la lentille de collimation est plus fine.

La combinaison des dispositifs optiques de l'invention permet de garantir la durabilité des performances du procédé de coupage laser, en particulier dans le cas d'un procédé de coupage laser obtenu avec un laser à solide, en particulier un laser à fibre, grâce à une maîtrise de l'amplitude des phénomènes de dérive focale et d'échauffement de la tête de coupage laser.

**Revendications**

1. Tête de focalisation de faisceau laser comprenant une lentille de collimation (13) et une lentille de focalisation (14), **caractérisée en ce que** :

   - la lentille de collimation (13) est en ZnS,
   - la lentille de focalisation (14) est en silice fondue,
   - la lentille de collimation (13) et la lentille de focalisation (14) ont une épaisseur aux bords d'au moins 5 mm, et
   - un miroir de renvoi (15) fonctionnant à un angle d'incidence ($\alpha$) compris entre 40 et 50° est agencé, sur le trajet du faisceau laser au sein de ladite tête de focalisation, entre les lentilles de collimation (13) et de focalisation (14).

2. Tête de focalisation selon la revendication 1, **caractérisée en ce que** la lentille de collimation (13) et la lentille de focalisation (14) ont une épaisseur aux bords comprise entre 5 et 10 mm, de préférence entre 6 et 8 mm.

3. Tête de focalisation selon l'une des revendications précédentes, **caractérisée en ce que** la lentille de collimation (13) et la lentille de focalisation (14) ont un diamètre compris entre 35 et 55 mm.

4. Tête de focalisation selon l'une des revendications précédentes, **caractérisée en ce que** le miroir de renvoi (15) est en silice fondue.

**5.** Installation de coupage par faisceau laser comprenant :

- un dispositif à laser solide (SL) émettant un faisceau laser de longueur d'onde comprise entre 1.06 et 1.10 μm et de puissance comprise entre 0.1 et 25 kW,
- une tête de focalisation selon l'une des revendications précédentes, et
- une fibre de convoyage (FDC) reliant le dispositif à laser solide (SL) à la tête de focalisation de manière à acheminer le faisceau laser émis par le dispositif à laser solide (SL) à la tête de focalisation.

**6.** Installation selon la revendication 5, **caractérisée en ce que** le dispositif à laser solide (SL) est de type à fibres ou à disques, de préférence à fibres d'ytterbium.

**7.** Installation selon l'une des revendications 5 ou 6, **caractérisée en ce que** le dispositif à laser solide (SL) émet un faisceau laser de puissance comprise entre 1 et 5 kW en mode continu, quasi-continu ou impulsionnel, de préférence en mode continu.

**8.** Installation selon l'une des revendications 5 à 7, **caractérisée en ce que** la fibre de convoyage (FDC) a un diamètre inférieur ou égal à 150 μm, de préférence un diamètre de 50 μm ou de 100 μm.

**9.** Installation selon l'une des revendications 5 à 8, **caractérisée en ce que** le dispositif à laser solide (SL) émet un faisceau laser ayant un BPP compris entre 1.6 et 4 mm.mrad.

**10.** Installation selon l'une des revendications 5 à 9, **caractérisée en ce que** la fibre de convoyage (FDC) a un diamètre de 50 μm et BPP compris entre 1.6 et 2.2 mm.mrad, et la lentille de collimation a une distance focale comprise entre 70 et 120 mm.

**11.** Installation selon l'une des revendications 5 à 9, **caractérisée en ce que** la fibre de convoyage (FDC) a un diamètre de 100 μm et un BPP compris entre 2.6 et 4 mm.mrad, et la lentille de collimation a une distance focale comprise entre 120 et 180 mm.

**12.** Installation selon l'une des revendications 5 à 11, **caractérisée en ce que** la lentille de focalisation a une distance focale comprise entre 200 et 300 mm.

**13.** Procédé de coupage par faisceau laser d'une pièce métallique (10), dans lequel on met en oeuvre une tête de focalisation selon l'une des revendications 1 à 4 ou une installation de coupage par faisceau laser selon l'une des revendications 5 à 12.


**Patentansprüche**

**1.** Laserstrahl-Fokussierkopf, der eine Kollimatorlinse (13) und eine Fokussierlinse (14) umfasst, **dadurch gekennzeichnet, dass**:

- die Kollimatorlinse (13) aus ZnS besteht,
- die Fokussierlinse (14) aus Quarzglas besteht,
- die Kollimatorlinse (13) und die Fokussierlinse (14) eine Randdicke von mindestens 5 mm besitzen, und
- ein Umlenkspiegel (15), der bei einem Einfallswinkel ($\alpha$) im Bereich zwischen 40 und 50° funktioniert, im Pfad des Laserstrahls innerhalb des Fokussierkopfes zwischen der Kollimator- (13) und der Fokussierlinse (14) angeordnet ist.

**2.** Fokussierkopf nach Anspruch 1, **dadurch gekennzeichnet, dass** die Kollimatorlinse (13) und die Fokussierlinse (14) eine Randdicke im Bereich zwischen 5 und 10 mm, bevorzugt zwischen 6 und 8 mm besitzen.

**3.** Fokussierkopf nach einem der vorstehenden Ansprüche, **dadurch gekennzeichnet, dass** die Kollimatorlinse (13) und die Fokussierlinse (14) einen Durchmesser im Bereich zwischen 35 und 55 mm besitzen.

**4.** Fokussierkopf nach einem der vorstehenden Ansprüche, **dadurch gekennzeichnet, dass** der Umlenkspiegel (15) aus Quarzglas besteht.

**5.** Laserstrahl-Schneidegerät, umfassend:

- eine Festkörperlaser-Vorrichtung (SL), die einen Laserstrahl einer Wellenlänge im Bereich zwischen 1,06 und 1,10 $\mu$m und einer Leistung im Bereich zwischen 0,1 und 25 kW emittiert,
- einen Fokussierkopf nach einem der vorstehenden Ansprüche, und
- eine Trägerfaser (FDC), die die Festkörperlaser-Vorrichtung (SL) so mit dem Fokussierkopf verbindet, dass der von der Festkörperlaser-Vorrichtung (SL) emittierte Laserstrahl zum Fokussierkopf geleitet wird.

**6.** Gerät nach Anspruch 5, **dadurch gekennzeichnet, dass** die Festkörperlaser-Vorrichtung (SL) vom Typ mit Fasern oder mit Scheiben, bevorzugt mit Ytterbium-Fasern ist.

**7.** Gerät nach einem der Ansprüche 5 oder 6, **dadurch gekennzeichnet, dass** die Festkörperlaser-Vorrichtung (SL) einen Laserstrahl einer Leistung im Bereich zwischen 1 und 5 kW im kontinuierlichen, quasi-kontinuierlichen oder gepulsten Modus, bevorzugt im kontinuierlichen Modus, emittiert.

**8.** Gerät nach einem der Ansprüche 5 bis 7, **dadurch gekennzeichnet, dass** die Trägerfaser (FDC) einen Durchmesser von kleiner oder gleich 150 $\mu$m, bevorzugt einen Durchmesser von 50 $\mu$m oder von 100 $\mu$m besitzt.

**9.** Gerät nach einem der Ansprüche 5 bis 8, **dadurch gekennzeichnet, dass** die Festkörperlaser-Vorrichtung (SL) einen Laserstrahl emittiert, der ein SPP im Bereich zwischen 1,6 und 4 mm.mrad besitzt.

**10.** Gerät nach einem der Ansprüche 5 bis 9, **dadurch gekennzeichnet, dass** die Trägerfaser (FDC) einen Durchmesser von 50 $\mu$m und ein SPP im Bereich zwischen 1,6 und 2,2 mm.mrad besitzt, und die Kollimatorlinse eine Brennweite im Bereich zwischen 70 und 120 mm besitzt.

**11.** Gerät nach einem der Ansprüche 5 bis 9, **dadurch gekennzeichnet, dass** die Trägerfaser (FDC) einen Durchmesser von 100 $\mu$m und ein SPP im Bereich zwischen 2,6 und 4 mm.mrad besitzt, und die Kollimatorlinse eine Brennweite im Bereich zwischen 120 und 180 mm besitzt.

**12.** Gerät nach einem der Ansprüche 5 bis 11, **dadurch gekennzeichnet, dass** die Fokussierlinse eine Brennweite im Bereich zwischen 200 und 300 mm besitzt.

**13.** Laserstrahl-Schneideverfahren eines Metallteils (10), wobei ein Fokussierkopf nach einem der Ansprüche 1 bis 4 oder ein Laserstrahl-Schneidegerät nach einem der Ansprüche 5 bis 12 eingesetzt wird.

**Claims**

**1.** Laser beam focussing head comprising a collimation lens (13) and a focussing lens (14), **characterised in that**:

- the collimation lens (13) is made of ZnS,
- the focussing lens (14) is made of fused silica,
- the thicknesses at the edges of the collimation lens (13) and the focussing lens (14) are at least 5 mm, and
- a turning mirror (15) operating at an angle of incidence ($\alpha$) equal to between 40 and 50° is set out on the path of the laser beam within said focussing head, between the collimation lens (13) and the focussing lens (14).

**2.** Focussing head according to claim 1, **characterised in that** the thicknesses at the edges of the collimation lens (13) and the focussing lens (14) are between 5 and 10 mm, and preferably between 6 and 8 mm.

**3.** Focussing head according to one of the previous claims, **characterised in that** the diameters of the collimation lens (13) and the focussing lens (14) are between 35 and 55 mm.

**4.** Focussing head according to one of the previous claims, **characterised in that** the return mirror (15) is made of fused silica.

**5.** Laser beam cutting installation comprising:

- a solid laser (SL) device emitting a laser beam with a wavelength of between 1.06 and 1.10 $\mu$m and with a

power of between 0.1 and 25 kW,

- a focussing head according to one of the above claims, and

- a conveying fibre (FDC) connecting the solid laser (SL) device to the focussing head so as to route the laser beam emitted by the solid laser (SL) device to the focussing head.

6. Installation according to claim 5, **characterised in that** the solid laser (SL) device is of the fibre or disk type, preferably with ytterbium fibres.

7. Installation according to one of claims 5 or 6, **characterised in that** the solid laser (SL) device emits a laser beam with a power of between 1 and 5 kW in continuous, quasi-continuous or pulse mode, and preferably in continuous mode.

8. Installation according to one of claims 5 to 7, **characterised in that** the diameter of the conveying fibre (FDC) is less than or equal to 150 $\mu$m and is preferably 50 $\mu$m or 100 $\mu$m.

9. Installation according to one of claims 5 to 8, **characterised in that** the solid laser (SL) device emits a laser beam with a BPP of between 1.6 and 4 mm.mrad.

10. Installation according to one of claims 5 to 9, **characterised in that** the diameter of the conveying fibre (FDC) is 50 $\mu$m and its BPP is between 1.6 and 2.2 mm.mrad, and the focal distance of the collimation lens is between 70 $\mu$m and 120 $\mu$m.

11. Installation according to one of claims 5 to 9, **characterised in that** the diameter of the conveying fibre (FDC) is 100 $\mu$m and its BPP is between 2.6 and 4 mm.mrad, and the focal distance of the collimation lens is between 120 $\mu$m and 180 $\mu$m.

12. Installation according to one of claims 5 to 11, **characterised in that** the focal distance of the focussing lens is between 200 $\mu$m and 300 $\mu$m.

13. Method of cutting a metal part (10) by laser beam, in which a focussing head according to one of claims 1 to 4, or a laser beam cutting installation according to one of claims 5 to 12, is used.

Figure 1

Figure 2

Figure 3

Figure 4

Figure 5

EP 2 472 305 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2009226473 A
- US 20100276403 A

- EP 2105239 A

**Littérature non-brevet citée dans la description**

- **V. I. BREDIKHIN et al.** *Inorganic Materials,* 2009, vol. 45 (3